# EUROPÄISCHE PATENTSCHRIFT

(11) **EP 2 307 612 B1**
(45) Veröffentlichungstag und Bekanntmachung des Hinweises auf die Patenterteilung: **16.10.2013**
(21) Anmeldenummer: 09780770.5
(22) Anmeldetag: 17.07.2009
(51) Int. Cl.: A47L 13/02, B01D 1/28, B01D 5/00, B01D 35/16, B24D 3/28, A47L 13/00, D21H 19/16, D21H 19/26, A47L 13/16

(54) **FLEXIBLE, FLÄCHIGE SUBSTRATE MIT EINER ABRASIVEN OBERFLÄCHE**
FLEXIBLE, FLAT SUBSTRATE WITH AN ABRASIVE SURFACE
SUBSTRATS FLEXIBLES ÉTENDUS AVEC SURFACE ABRASIVE

(30) Priorität: 24.07.2008 EP 08161065; 16.07.2009 EP 09165664
(43) Veröffentlichungstag der Anmeldung: 13.04.2011
(73) Patentinhaber: BASF SE, 67056 Ludwigshafen (DE)
(72) Erfinder: KÄSMAYR, Daniel, 67061 Ludwigshafen (DE); PERETOLCHIN, Maxim, 68161 Mannheim (DE); PFEIFFER, Matthias, 67459 Böhl-Iggelheim (DE); WEINKÖTZ, Stephan, 67434 Neustadt (DE)
(86) Internationale Anmeldenummer: PCT/EP2009/059224
(87) Internationale Veröffentlichungsnummer: WO 2010/010046

(56) Entgegenhaltungen:
- WO-A-01/94436
- WO-A-2004/065484
- GB-A- 1 536 549
- US-A1- 2005 202 232
- US-B1- 6 713 156

## Beschreibung

Die Erfindung betrifft flexible, flächige Substrate mit einer abrasiven Oberfläche und ihre Verwendung als Wischtücher für die Reinigung von Oberflächen im Haushalt und in der Industrie.

Aus der WO 01/94436 ist ein Verfahren zur Herstellung von elastischen Schaumstoffen auf Basis eines Melamin/Formaldehyd-Kondensationsproduktes bekannt. Bei diesem Verfahren wird eine wässrige Lösung oder Dispersion, die ein Melamin/Formaldehyd-Vorkondensat, einen Emulgator, ein Treibmittel, einen Härter und gegebenenfalls übliche Zusatzstoffe enthält, durch Erhitzen auf 120 bis 300 °C verschäumt und das Vorkondensat vernetzt. Das Molverhältnis von Melamin zu Formaldehyd ist größer als 1 : 2. Es liegt z. B. zwischen 1 : 1,0 und 1 : 1,9. Die so erhältlichen offenzelligen, flexiblen Schaumstoffe werden hauptsächlich für die Wärme- und Schalldämmung von Gebäuden und Gebäudeteilen, für die Wärme- und Schalldämmung der Innenräume von Fahrzeugen und Flugzeugen sowie für die Tieftemperaturisolierung z. B. in Kühlhäusern, verwendet. Die Schaumstoffe werden auch als isolierendes und stoßdämmendes Verpackungsmaterial sowie aufgrund der hohen Härte von vernetzten Melaminharzen für leicht abrasiv wirkende Reinigungs-, Schleif- und Polierschwämme eingesetzt.

In der US-B 6,713,156 werden flächige Substrate beschrieben, deren Oberfläche beim Reiben auf anderen Gegenständen eine Schleifwirkung entfaltet. Solche abrasiven Substrate werden beispielsweise durch Sprühen, Schäumen oder Drucken von Polymeren auf eine flächige Unterlage wie Nonwovens oder Papier dadurch erhalten, dass man die Polymeren darauf ungleichmäßig aufträgt und härtet. Das Härten der Polymeren muss dabei schnell erfolgen, weil ein ungleichmäßiger Auftrag des Polymeren für die Schleifwirkung des Substrats verantwortlich ist. Die verwendeten Polymerzusammensetzungen haben eine minimale Filmbildungstemperatur (MFT) von mehr als -10 °C und enthalten mindestens ein Polymer mit einer Tg von mindestens 0 °C, meistens von 20 bis 105 °C. Die Polymerzusammensetzung kann bis zu 20 Gew.-% an Zusatzstoffen enthalten z. B. Weichmacher, Vernetzer, Stärke, Polyvinylalkohol, mit Formaldehyd wärmehärtbare Mittel wie Melamin, Harnstoff und Phenol. Die Auftragsmenge beträgt allgemein mehr als 20 Gew.-%, vorzugsweise 30 bis 50 Gew.-%, bezogen auf Nonwovens und andere poröse Substrate. Die ungleichmäßig mit Polymeren beschichteten Substrate werden beispielsweise als Scheuertücher und als Wischtücher in Haushalt und Industrie, als kosmetische Wischtücher und als Tupfer für die Wundbehandlung verwendet.

Aus der US 2005/0202232 sind Produkte bekannt, die aus mindestens einer blattförmigen Melaminschaumschicht und mindestens einer Verstärkungsschicht bestehen. Als Melaminschaum wird Basotect^{®} der BASF SE genannt. Basotect^{®} ist ein offenzelliger Schaumstoff auf Basis eines Melamin/Formaldehyd-Kondensationsproduktes. Die blattförmige Melaminschaumschicht und die ebenfalls blattförmige Verstärkungsschicht aus Cellulosefasern oder natürlichen oder synthetischen Textilfasern werden beispielsweise mit Hilfe eines Schmelzklebers miteinander verbunden. Sie können jedoch auch in Abhängigkeit von der Art der Verstärkungsschicht direkt miteinander kombiniert werden, beispielsweise durch Einwirkung von Wärme und gegebenenfalls Druck. Die so erhältlichen Produkte, die zumindest auf einer Blattseite eine Melaminschaumschicht aufweisen, werden wegen der hohen Härte der Melaminschaumschicht als Artikel für die Reinigung und Pflege von Oberflächen im Haushalt und in der Industrie verwendet. Vorzugsweise handelt es sich hierbei um Einmalartikel, die nach dem Gebrauch entsorgt werden. Meistens sind es Tücher, die eine Dicke von weniger als 5 mm, vorzugsweise 0,85 bis 2 mm haben.

Leime und Tränkharze, die jeweils als wässrige Bindemittel oder Pulver auf Basis von Kondensaten aus Harnstoff, Melamin und Formaldehyd als Kauramin^{®} and Kaurit^{®} von BASF SE, 67056 Ludwigshafen, verkauft werden, verwendet man in der Möbel- und Bauindustrie zur Herstellung von plattenförmigen Holzwerkstoffen wie Spanplatten, Sperrholz- und Schalungsplatten, vgl. Technische Information Kaurit^{®}. Mit Tränkharzen imprägnierte Papiere besitzen eine harte Oberfläche. Solche Produkte findet man beispielsweise in Oberflächen von Laminatfußböden oder im Dekor von Möbeln, vgl. Technische Information Kauramin^{®}.

Um die Nassfestigkeit von Papier zu erhöhen, setzt man z. B. Melamin/FormaldehydHarze bei der Herstellung von Papier dem Papierstoff vor der Blattbildung zu, z. B. Urecoll^{®} K, BASF SE, 67056 Ludwigshafen. Die im Papierstoff vorhandenen Mengen an Harz betragen beispielsweise etwa 0,5 bis 1 Gew.-%, bezogen auf trockenen Papierstoff.

Bekannte Wischtücher wie Küchenrolle oder Tissue, die für einen Einmalgebrauch vorgesehen sind, weisen insbesondere im feuchten Zustand keine genügende Stabilität auf, um eine ausreichende Wischwirkung zu gewährleisten.

Aus der WO-Anmeldung 2008/000665 A2 ist ein Verfahren zur Ausrüstung von Papier und Papierprodukten mit mindestens einem Ausrüstungsmittel bekannt, wobei man auf die Oberseite und/oder Unterseite von Papier oder Papierprodukten mindestens ein Ausrüstungsmittel in Form eines Musters aufbringt. Bei diesem Verfahren benötigt man im Vergleich zu bekannten Ausrüstungsverfahren geringere Mengen an Ausrüstungsmitteln, um Papiere mit vergleichbaren Eigenschaften herzustellen. Als Ausrüstungsmittel kommen u.a. auch Melamin/Formaldehyd-Harze und Hamstoff/Formaldehyd-Harze in Betracht. Viskositätsverbessernde Additive, auch Verdicker genannt, werden nicht genannt.

Der Erfindung liegt die Aufgabe zugrunde, Substrate mit einer abrasiven Oberfläche für die Reinigung von Oberflächen im Haushalt und in der Industrie zur Verfügung zu stellen.

Die Aufgabe wird erfindungsgemäß gelöst mit flexiblen, flächigen Substraten mit einer abrasiven Oberfläche, die erhältlich sind durch Aufbringen einer wässrigen Lösung oder Dispersion mindestens eines Vorkondensates eines wärmehärtbaren Harzes auf die Oberseite und/oder Unterseite eines flexiblen, flächigen Substrates in einer Menge von 0,1 bis 90 Gew.-%, bezogen auf das unbeschichtete, trockene Substrat, Vernetzen des Vorkondensates und Trocknen des behandelten Substrates wobei die wässrige Lösung oder Dispersion mindestens eines Vorkondensates eines wärmehärtbaren Harzes (i) einen polymeren Verdicker ausgewählt aus der Gruppe bestehend aus: Biopolymeren, assoziativen Verdickern und vollsynthetischen Verdickern in einer Menge im Bereich von 0,01 Gew.-% bis 10 Gew.-% und gegebenenfalls (ii) einen Härter der erst bei Temperaturen ab circa 60 °C die Weiterkondensation des wärmehärtbaren Harzes katalysiert, enthält.

Die Aufgabe wird erfindungsgemäß ebenfalls gelöst mit einem Verfahren zur Herstellung von flexiblen, flächigen Substraten mit einer abrasiven Oberfläche, wobei man eine wässrige Lösung oder Dispersion mindestens eines Vorkondensates eines wärmehärtbaren Harzes auf die Oberseite und/oder Unterseite eines flexiblen, flächigen Substrates in einer Menge im Bereich von 0,1 bis 90 Gew.-%, bezogen auf das unbeschichtete, trockene Substrat aufbringt, anschließend das Vorkondensat vernetzt und das behandelte Substrat trocknet, dadurch gekennzeichnet, daß die wässrige Lösung oder Dispersion mindestens eines Vorkondensates eines wärmehärtbaren Harzes (i) einen polymeren Verdicker ausgewählt aus der Gruppe bestehend aus: Biopolymeren, assoziativen Verdickern und vollsynthetischen Verdickern in einer Menge im Bereich von 0,01 Gew.-% bis 10 Gew.-% und gegebenenfalls (ii) einen Härter der erst bei Temperaturen ab circa 60 °C die Weiterkondensation des wärmehärtbaren Harzes katalysiert, enthält.

Unter abrasiver Oberfläche soll verstanden werden, dass beim Bewegen dieser Oberfläche über eine andere Oberfläche eine Reib- bzw. Scheuerwirkung auf die andere Oberfläche ausgeübt wird. Während beispielsweise Papiere aus Tissue beim Gebrauch praktisch keine scheuernde Wirkung zeigen, entfalten die erfindungsgemäßen Substrate beim Wischen von Oberflächen aus Glas-, Metall- oder Kunststoff eine scheuernde Wirkung, die für die Reinigung dieser Oberflächen gewünscht ist. Die scheuernde Wirkung ist dabei jedoch weitaus geringer als von Schmirgelpapier, so dass die erfindungsgemäßen Substrate für alle diejenigen Anwendungen in Betracht kommen, bei denen für die Entfernung von Schmutz lediglich eine geringe scheuernde Wirkung erwünscht ist, so dass die Oberfläche der mit den erfindungsgemäßen Substraten gewischten Materialien praktisch nicht geschädigt wird. Die erfindungsgemäßen Produkte werden vorzugsweise als Einmalartikel eingesetzt, können jedoch auch - in Abhängigkeit von der jeweiligen Anwendung - mehrmals verwendet werden.

Beispiele für flächige Substrate sind Papier, Pappe, Karton, Gewebe (inclusive sogenannter Tissues), Gewirke und Vliese (inclusive sogenannter Nonwovens).

Papier, Pappe und Karton können aus Cellulosefasern aller Art hergestellt werden, sowohl aus natürlichen Cellulosefasern wie auch von zurückgewonnenen Fasern, insbesondere Fasern aus Altpapier, die häufig in Mischung mit frischen Fasern ("virgin fibers") eingesetzt werden. Die Fasern werden in Wasser zu einer Pulpe suspendiert, die auf einem Sieb unter Blattbildung entwässert wird. Als Faserstoff zur Herstellung der Pulpen kommen sämtliche dafür in der Papierindustrie gebräuchlichen Qualitäten in Betracht, z. B. Holzstoff, gebleichter und ungebleichter Zellstoff sowie Papierstoffe aus allen Einjahrespflanzen. Zu Holzstoff gehören beispielsweise Holzschliff, thermomechanischer Stoff (TMP), chemo-thermomechanischer Stoff (CTMP), Druckschliff, Halbzellstoff, Hochausbeutezellstoff und Refiner Mechanical Pulp (RMP). Als Zellstoff kommen beispielsweise Sulfat-, Sulfit- und Natronzellstoffe in Betracht. Vorzugsweise verwendet man ungebleichten Zellstoff, der auch als ungebleichter Kraftzellstoff bezeichnet wird. Geeignete Einjahrespflanzen zur Herstellung von Papierstoffen sind beispielsweise Reis, Weizen, Zuckerrohr und Kenaf. Das Flächengewicht der Papierprodukte, die das flächige Substrat für die erfindungsgemäßen Produkte darstellen, beträgt beispielsweise 7,5 bis 500 g/m², vorzugsweise 10 bis 150 g/m², insbesondere 10 bis 100 g/m². Besonders bevorzugte flächige Substrate sind Papiere aus Tissue sowie Papiere, die über eine strukturierte Oberfläche verfügen, beispielsweise die im Haushalt übliche Küchenrolle. Solche Papierprodukte haben beispielsweise ein Flächengewicht von 10 bis 60 g/m². Die verwendeten flächigen Substrate können aus einer Lage bestehen oder aus mehreren Lagen zusammengesetzt sein, indem zum Beispiel die noch feuchten Lagen unmittelbar nach der Herstellung übereinander gelegt und gepresst werden, oder die bereits trockenen Lagen mit Hilfe von entsprechenden Klebstoffen miteinander verklebt werden.

Gewebe (inclusive sogenannter Tissues), Gewirke und Vliese (inclusive sogenannter Nonwovens), die ebenfalls als flächige Substrate in Betracht kommen, bestehen üblicherweise aus Textilfasern oder Mischungen von Textilfasern. Beispiele hierfür sind Fasern aus Baumwolle, Cellulose, Hanf, Wolle, Polyamid wie Nylon, Perlon^{®} oder Polycaprolactam, Polyester und Polyacrylnitril. Beispiele für Tissues und Nonwovens sind Reinigungstücher aller Art, zum Beispiel Haushaltsreinigungstücher.

Die Dicke der flächigen Substrate beträgt beispielsweise 0,01 bis 100 mm, vorzugsweise 0,05 bis 10 mm. Sie liegt meistens in dem Bereich von 0,05 bis 3 mm. Die flächigen Substrate liegen beispielsweise in Form einer Bahn oder eines Blattes vor. Solche Materialien sind flexibel. Sie behalten ihre Flexibilität auch nach dem Aufbringen und Aushärten eines wärmehärtbaren Harzes, das nämlich höchstens in einer solchen Menge aufgebracht werden soll, dass die Flexibilität des unbehandelten Substrates gerade noch erhalten bleibt. Die Flexibilität des unbehandelten Substrates nimmt aufgrund des Auftrags des wärmehärtbaren Harzes zwar ab, jedoch wird die Menge des Harzes so bemessen, dass keine starren, unbiegsamen Strukturen entstehen, wie sie beispielsweise bei Möbelfurnieren üblich sind. Das erfindungsgemäß beschichtete Papier darf keinesfalls brüchig sein und soll beim Biegen und beim Zusammenfalten nicht wie Glas brechen. Erfindungsgemäß beschichteter Karton ist ebenfalls noch zerstörungsfrei biegbar, besitzt jedoch gegenüber einem nicht beschichteten Karton eine wesentlich verbesserte Wischwirkung.

Zur Herstellung der flexiblen, flächigen Substrate mit einer abrasiven Oberfläche werden flächige Substrate wie Vliese (inclusive sogenannter Nonwovens), Gewebe (inclusive sogenannter Tissues), Gewirke, Papier, Pappe und Karton zunächst mit einer wässrigen Lösung oder Dispersion eines Vorkondensates mindestens eines wärmehärtbaren Harzes behandelt.

Die Vorkondensate der wärmehärtbaren Harze sind ausgewählt aus der Gruppe der Melamin/Formaldehyd-Vorkondensate, Harnstoff/Formaldehyd-Vorkondensate, Harnstoff/Glyoxal-Vorkondensate und Phenol/Formaldehyd-Vorkondensate.

Vorzugsweise setzt man ein Vorkondensat aus Melamin und Formaldehyd ein, bei dem das Molverhältnis von Melamin zu Formaldehyd größer als 1 : 2 ist. Vorzugsweise verwendet man als wärmehärtbares Harz ein Vorkondensat aus Melamin und Formaldehyd, bei dem das Molverhältnis von Melamin zu Formaldehyd 1 : 1,0 bis 1 : 1,9 beträgt. Melamin/Formaldehyd-Kondensationsprodukte können neben Melamin bis zu 50 Gew.-%, vorzugsweise bis zu 20 Gew.-% anderer Duroplastbildner und neben Formaldehyd bis zu 50 Gew.-%, meistens bis zu 20 Gew.-% andere Aldehyde einkondensiert enthalten. Als Duroplastbildner kommen beispielsweise alkyl- und arylsubstituiertes Melamin, Harnstoff, Urethane, Carbonsäureamide, Dicyandiamid, Guanidin, Sulfurylamid, Sulfonsäureamide, aliphatische Amine, Glykole, Phenol und Phenolderivate in Betracht. Als Aldehyde können beispielsweise zum teilweisen Ersatz des Formaldehyds in den Kondensaten Acetaldehyd, Propionaldehyd, Isobutyraldehyd, n-Buturaldehyd, Trimethylolacetaldehyd, Acrolein, Benzaldehyd, Furfurol, Glyoxal, Glutaraldehyd, Phthalaldehyd und Terephthalaldehyd eingesetzt werden.

Die Vorkondensate können gegebenenfalls mit mindestens einem Alkohol verethert sein. Beispiele hierfür sind einwertige C₁- bis C₁₈-Alkohole wie Methanol, Ethanol, Isopropanol, n-Propanol, n-Butanol, sec.-Butanol, Isobutanol, n-Pentanol, Cyclopentanol, n-Hexanol, Cyclohehanol, n-Octanol, Decanol, Palmitylalkohol und Stearylalkohol, mehrwertige Alkohole wie Glykol, Diethylenglykol, Glycerin, Butandiol-1,4, Hexandiol-1,6, Polyethylenglykole mit 3 bis 20 Ethylenoxid-Einheiten, einseitig endgruppenverschlossene Glykole und Polyalkylenglykole, Propylenglykol-1,2, Propylenglykol-1,3, Polypropylenglykole, Pentaerythrit und Trimethylolpropan.

Die Herstellung wärmehärtbarer Harze gehört zum Stand der Technik, vgl. Ullmanns Encyclopedia of Industrial Chemistry, Sixth Completely Revised Edition, Wiley-VCH Verlag GmbH Co. KgaA, Weinheim, "Amino Resins", Vol. 2, Seiten 537-565 (2003).

Man geht dabei von einer wässrigen Lösung oder Dispersion eines Vorkondensates vorzugsweise aus Melamin und Formaldehyd aus. Die Feststoffkonzentration beträgt beispielsweise 5 bis 95 Gew.-%, vorzugsweise liegt sie in dem Bereich von 10 bis 70 Gew.-%.

Die Lösung oder Dispersion des Vorkondensates kann einen Härter enthalten, kann aber auch ohne Härter eingesetzt werden.

Als Härter wählt man solche Substanzen aus, die erst bei Temperaturen ab circa 60 °C als Härter wirken, also die Weiterkondensation der wärmehärtbaren Harze katalysieren; derartige erfindungsgemäße Härter werden im folgenden auch erfindungsgemäße "langsame" Härter genannt.

Ob eine Substanz ein erfindungsgemäßer "langsamer" Härter ist kann in der Regel durch wenige Vergleichsversuche mit üblichen Säure-Härtern, zum Beispiel Ameisensäure, in den üblichen Mengen ermittelt werden. Die Viskositätserhöhung der mit erfindungsgemäßen "langsamen" Härtern versetzten Lösung oder Dispersion des Vorkondensates verläuft viel langsamer als eine vergleichbare Lösung eines Vorkondensats, welcher zum Beispiel Ameisensäure als Härter unter vergleichbaren Bedingungen zugesetzt wurde.

Gut geeignete erfindungsgemäße "langsame" Härter enthalten als härteraktive Komponenten Salze von Säuren mit Ammoniak oder Aminen oder Addukte von Lewissäuren (zum Beispiel Schwefeldioxid) mit Ammoniak oder Aminen. Beispiele für erfindungsgemäße "langsame" Härter sind Ammoniumnitrat, oder die Stoffe mit den Produktbezeichnungen "Härter 423", "Härter 527", "Härter 528", "Härter 529" der BASF SE.

In besonderen Fällen kann man die für die Kondensation genannten erfindungsgemäßen "langsamen" Härter auch separat auf das flächige Substrat auftragen.

Die eingesetzten Mengen der erfindungsgemäßen "langsamen" Härter betragen in der Regel 0,01 bis 70 Gew.-%, vorzugsweise 0,05 bis 60 Gew.-%, bezogen auf das Harz.

Die wässrige Lösung oder Dispersion eines Vorkondensates eines wärmehärtbaren Harzes kann gegebenenfalls noch ein Tensid enthalten. Geeignet sind beispielsweise nichtionische, anionische und kationische Tenside sowie Mischungen aus mindestens einem nichtionischen und mindestens einem anionischen Tensid, Mischungen aus mindestens einem nichtionischen und mindestens einem kationischen Tensid, Mischungen aus mehreren nichtionischen oder aus mehreren kationischen oder aus mehreren anionischen Tensiden.

Als Tenside kommen beispielsweise alle oberflächenaktiven Mittel in Betracht. Beispiele für geeignete nichtionische oberflächenaktive Stoffe sind ethoxylierte Mono-, Di- und Tri-Alkylphenole (Ethoxylierungsgrad: 3 bis 50, Alkylrest: C₃-C₁₂) sowie ethoxylierte Fettalkohole (Ethoxylierungsgrad: 3 bis 80; Alkylrest: C₈-C₃₆). Beispiele hierfür sind die Marken Lutensol^{®} der BASF SE oder die Marken Triton^{®} der Union Carbide. Besonders bevorzugt sind ethoxylierte lineare Fettalkohole der allgemeinen Formel

n-CₓH₂ₓ₊₁-O(CH₂CH₂O)_{y}-H,

wobei x ganze Zahlen im Bereich von 10 bis 24, bevorzugt im Bereich von 12 bis 20 sind. Die Variable y steht vorzugsweise für ganze Zahlen im Bereich von 5 bis 50, besonders bevorzugt 8 bis 40. Ethoxylierte lineare Fettalkohole liegen üblicherweise als Gemisch verschiedener ethoxylierter Fettalkohole mit unterschiedlichem Ethoxylierungsgrad vor. Die Variable y steht im Rahmen der vorliegenden Erfindung für den Mittelwert (Zahlenmittel). Geeignete nichtionische oberflächenaktive Substanzen sind weiterhin Copolymere, insbesondere Blockcopolymere von Ethylenoxid und wenigstens einem C₃-C₁₀-Alkylenoxid, z. B. Triblockcopolymere der Formel

RO(CH₂CH₂O)_{y1}-(BO)_{y2}-(A-O)ₘ-(B'O)_{y3}-(CH₂CH₂O)_{y4}R'.

worin m für 0 oder 1 steht, A für einen von einem aliphatischen, cycloaliphatischen oder aromatischen Diol abgeleiteten Rest, z.B. für Ethan-1,2-diyl, propan-1,3-diyl, Butan-1,4-diyl, Cyclohexan-1,4-diyl, Cyclohexan-1,2-diyl oder Bis(cylohexyl)methan-4,4'-diyl steht, B und B' unabhängig voneinander Propan-1,2-diyl, Butan-1,2-diyl oder Phenylethanyl unabhängig voneinander für eine Zahl von 2 bis 100 und Y2, Y3 unabhängig voneinander für eine Zahl von 2 bis 100 stehen, wobei die Summe y1 + y2 + y3 + y4 vorzugsweise im Bereich von 20 bis 400 steht, was einem zahlenmittleren Molekulargewicht im Bereich von 1000 bis 20000 entspricht. Vorzugsweise steht A für Ethan-1,2-diyl, Propan-1,3-diyl oder Butan-1,4-diyl. B steht vorzugsweise für Propan-1,2-diyl.

Außerdem eignen sich als oberflächenaktive Substanzen mit Fluor substituierte Polyalkylenglykole, die zum Beispiel unter dem Warenzeichen Zonyl^{®} (DuPont) im Handel erhältlich sind.

Als oberflächenaktive Substanzen kommen außer den nichtionischen Tensiden auch anionische und kationische Tenside in Betracht. Sie können allein oder als Mischung eingesetzt werden. Voraussetzung dafür ist allerdings, dass sie miteinander verträglich sind, d.h. miteinander keine Niederschläge ergeben. Diese Voraussetzung trifft beispielsweise für Mischungen aus jeweils einer Verbindungsklasse sowie für Mischungen aus nichtionischen und anionischen Tensiden und Mischungen aus nichtionischen und kationischen Tensiden zu. Beispiele für geeignete anionische oberflächenaktive Mittel sind Natriumlaurylsulfat, Natriumdodecylsulfat, Natriumhexadecylsulfat und Natriumdioctylsulfosuccinat.

Beispiele für kationische Tenside sind quartäre Alkylammoniumsalze, Alkylbenzylammoniumsalze, wie Dimethyl-C₁₂- bis C₁₈-alkylbenzylammoniumchloride, primäre, sekundäre und tertiäre Fettaminsalze, quartäre Amidoaminverbindungen, Alkylpyridiniumsalze, Alkylimidazoliniumsalze und Alkyloxazoliniumsalze.

Besonders bevorzugt sind anionische Tenside, wie z. B. mit Schwefelsäure veresterte (gegebenenfalls alkoxylierte) Alkohole, die meistens in mit Alkalilauge neutralisierter Form verwendet werden. Weitere übliche Emulgatoren sind beispielsweise Natriumalkylsulfonate, Natriumalkylsulfate wie z. B. Natriumlaurylsulfat, Natriumdodecylbenzolsulfonat, Sulfobernsteinsäureester. Weiterhin können als anionische Emulgatoren auch Ester der Phoshorsäure oder der phosphorigen Säure sowie aliphatische oder aromatische Carbonsäuren verwendet werden. Übliche Emulgatoren sind in der Literatur eingehend beschrieben, siehe beispielsweise M. Ash, I. Ash, Handbook of Industrial Surfactants, Third Edition, Synapse Information Resources Inc.

Die wässrige Lösung oder Dispersion mindestens eines Vorkondensates kann die Tenside in einer Menge von bis zu 10 Gew.-% enthalten. Falls sie ein Tensid enthält, so betragen die vorzugsweise in der Lösung oder Dispersion vorhandenen Mengen an Tensid 0,01 bis 5 Gew.-%.

Die wässrige Lösung oder Dispersion des Vorkondensates kann gegebenenfalls weitere übliche Zusatzstoffe enthalten, z. B. teilchenförmige, anorganische Verbindungen wie Siliziumdioxid, Aluminiumoxid, Siliciumcarbid, Titandioxid, Zinkoxid, Calciumcarbonat, Marmor und Korund. Der mittlere Teilchendurchmesser der anorganischen Verbindungen beträgt beispielsweise 1 nm bis 500 µm.

Die Menge dieser Zusatzstoffe beträgt beispielsweise 0 bis 100, vorzugsweise 0 bis 25 Gew.-%, bezogen auf die Lösung oder Dispersion.

Die erfindungsgemäßen flexiblen, flächigen Substrate sind vorzugsweise frei von Materialien, die beim Reiben auf einer anderen Oberfläche eine scheuernde Wirkung entfalten wie beispielsweise Siliciumcarbid oder Aluminiumoxid.

Die erfindungsgemäßen flexiblen, flächigen Substrate, zum Beispiel Papier, Pappe, Karton, Gewebe (inclusive sogenannter Tissues), Gewirke und Vliese (inclusive sogenannter Nonwovens), vorzugsweise Gewebe (inclusive sogenannter Tissues), Gewirke und Vliese (inclusive sogenannter Nonwovens), können neben den oben genannten üblichen Zusatzstoffen oder anstatt der oben genannten üblichen Zusatzstoffe noch Wirk- und Effektstoffe, vorzugsweise in einer Menge im Bereich von 0,01 Gew.-% bis 10 Gew.-%, besonders bevorzugt von 0,01 Gew.-% bis 1 Gew.-%, enthalten.

Derartige Wirk- und Effektstoffe sind bevorzugt Duftstoffe, Farbstoffe oder Pigmente, Wachse, Tenside, Oberflächenaktive Stoffe, Amphiphile Polymere, Pflegemittel für Oberflächen, Glanz erzeugende Stoffe, antibakterielle Ausrüstung, Biozide, Silber-Ionen, Nanopartikel, Silicone.

Die Wirk- und Effektstoffe, vorzugsweise flüchtige Wirk- und Effektstoffe wie Duftstoffe oder auch wasserunlösliche Wirk- und Effektstoffe, wie Wachse oder Silicone, können verkapselt, bevorzugt in Mikrokapseln, vorliegen.

Die Wirk- und Effektstoffe können auf beliebige Art und Weise auf oder in die erfindungsgemäßen flexiblen, flächigen Substraten gebracht werden. Bevorzugt werden sie im selben Arbeitsschritt wie das Harz auf die flächigen Substrate aufgebracht. Besonders bevorzugt werden Sie als Teil der Harzlösung oder-dispersion eingesetzt.

In einem gut geeigneten Verfahren werden die Wirk- und Effektstoffe, vorzugsweise unverkapselte oder (mikro)verkapselte Duftstoffe, der fertigen wässrigen Lösung oder Dispersion des Vorkondensates zugegeben, bevor diese auf das flächige Substrat, vorzugsweise Papier, Pappe, Karton, Gewebe (inclusive sogenannter Tissues), Gewirke und Vliese (inclusive sogenannter Nonwovens) aufgetragen wird.

In einem weiteren gut geeigneten Verfahren werden die Wirk- und Effektstoffe, vorzugsweise unverkapselte oder (mikro)verkapselte Duftstoffe, bei der Herstellung der wässrige Lösung oder Dispersion des Vorkondensates zugegeben und diese wird dann auf das flächige Substrat, vorzugsweise Papier, Pappe, Karton, Gewebe (inclusive sogenannter Tissues), Gewirke und Vliese (inclusive sogenannter Nonwovens) aufgetragen.

In einem weiteren gut geeigneten Verfahren werden die Wirk- und Effektstoffe, vorzugsweise unverkapselte oder (mikro)verkapselte Duftstoffe, bei der Herstellung des Vorkondensates zugegeben. Diese Mischung wird dann erst kurz vor der Auftragung auf das flächige Substrat in eine wässrige Lösung oder Dispersion überführt und dann auf das flächige Substrat vorzugsweise Papier, Pappe, Karton, Gewebe (inclusive sogenannter Tissues), Gewirke und Vliese (inclusive sogenannter Nonwovens) aufgetragen.

Üblicherweise werden die genannten Wirk- und Effektstoffe, vorzugsweise die (mikro)verkapselten Wirk- und Effektstoffe, besonders bevorzugt die (mikro)verkapselten flüchtigen Wirk- und Effektstoffe wie Duftstoffe und/oder wasserunlöslichen Wirk- und Effektstoffe, wie Wachse oder Silicone bei mechanischer Beanspruchung, wie Scheuern, Wischen oder sonstigem Reinigen, der erfindungsgemäßen flexiblen, flächigen Substrate teilweise oder vollständig freigesetzt.

Um eine gute und möglichst gleichmäßige Verteilung des Harzes, vorzugsweise auf der Oberfläche des Substrats und nicht in dessen tieferen Schichten, bei der Harz-Auftragung zu erreichen, ist ein bestimmtes rheologisches Verhalten oder eine bestimmte Viskosität der wässrigen Lösung oder Dispersion des Vorkondensats unerlässlich. Die wässrige Lösung oder Dispersion des Vorkondensats soll flüssig genug sein, dass sie sich auf dem Substrat leicht ausbreiten lässt, aber nicht so flüssig, dass sie beim Ausbreiten schnell in die tieferen Schichten des Substrats eindringt oder eingesogen wird.

Weiterhin ist es wichtig, eine gute und möglichst gleichmäßige Verteilung der wässrigen Lösung oder Dispersion des Vorkondensats auf den entsprechenden Harz-Auftragungsvorrichtungen, zum Beispiel Druckwalzen, zu erreichen, um einen gleichmäßigen Transfer der wässrigen Lösung oder Dispersion des Vorkondensats auf das Substrat, zum Beispiel, Papier, Pappe, Karton, Gewebe (inclusive sogenannter Tissues), Gewirke und Vlies (inclusive sogenannter Nonwovens) zu gewährleisten.

Weiterhin ist es wichtig eine geeignete Viskosität der wässrigen Lösung oder Dispersion des Vorkondensats einzustellen, damit beim Auftragen der wässrigen Lösung oder Dispersion des Vorkondensats mit der Sprühmethode die Tropfengröße des Vorkondensats möglichst gering ist, die Tropfen die Sprühdüse nicht verstopfen und sich gleichmäßig auf dem Substrat verteilen.

Die wässrige Lösung oder Dispersion des Vorkondensates enthält daher einen polymeren Verdicker im Bereich von 0,01 bis 10 Gew.-%, vorzugsweise im Bereich von 0,01 bis 5 Gew.-%, bezogen auf die wässrige Lösung oder Dispersion des Vorkondensates.

Derartige polymeren Verdicker werden ausgewählt aus der Gruppe bestehend aus:
a) Biopolymere, wie a1) Polysaccharide, zum Beispiel Stärke, Guarkernmehl, Johannisbrotkernmehl, Agar-Agar, Pektine, Gummi Arabicum, Xanthan; a2) Proteine, zum Beispiel Gelatine, Casein; b) assoziative Verdicker, wie b1) modifizierte Cellulosen, zum Beispiel Methylcellulose (MC), Hydroxyethylcellulose (HEC), Hydroxypropylmethylcellulose (HPMC), Hydroxypropylcellulose (HPC) und Ethylhydroxyethylcellulose (EHEC); b2) modifizierte Stärken, zum Beispiel Hydroxyethylstärke und Hydroxypropylstärke; c) vollsynthetische Verdicker, zum Beispiel Polyvinylalkohole, Polyacrylamide, Polyvinylpyrrolidon und Polyethylenglykole.
   Selbstverständlich sind auch jegliche Mischungen der genannten Verdicker a) und/oder
b) und/oder c) mit umfasst.

Um die erfindungsgemäßen Produkte herzustellen, kann man die Lösung oder Dispersion des Vorkondensates (nachstehend auch als "Präparationslösung" bezeichnet) entweder vollflächig oder auch in Form eines Musters auf das Substrat aufbringen. Die Präparationslösung kann vor dem Auftrag auf das flächige Substrat auch geschäumt werden, z. B. durch Einrühren von Luft oder anderen Gasen. Man erhält dann nach dem Aushärten und Trocknen flächige Substrate, die mit einem Schaum beschichtet sind, dessen Zellen im Gegensatz zu einem bekannten Schaumstoff aus einem wärmehärtbaren Harzes auf Basis von Melamin und Formaldehyd wie Basotect^{®} einen mittleren Durchmesser im Nanometer-Bereich haben, z. B. 1 bis 1000 nm.

Die Viskosität der Präparationslösung, also der wässrigen Lösung oder Dispersion des Vorkondensats mit oder ohne Härter, wird üblicherweise durch Zusatz der erfindungsgemäßen Verdicker eingestellt und danach auf das Substrat aufgebracht und erst anschließend ausgehärtet.

Konventionell wird die Viskosität aminoplasthaltiger Präparationslösungen durch Zusatz eines "schnellen" Härters auf Basis einer anorganischen oder organischen Säure verändert. Dies bewirkt bereits bei Raumtemperatur und insbesondere bei erhöhter Temperatur von circa 40 bis 60 °C eine verhältnismäßig rasche Weiterkondensation des Harzes in der Präparationslösung, welches in der Regel zu einer Viskositätserhöhung der Präparationslösung führt. Dieses Vorgehen ist allerdings schlecht kontrollierbar und führt zu einem sehr kurzen Verarbeitungszeitraum der entsprechenden weiterkondensierten Präparationslösung. Dies ist vor allem im kontinuierlichen Auftragungsbetrieb ein Nachteil.

Die vorliegende Erfindung ermöglicht es die gewünschte Viskosität der Präparationslösung ohne die unkontrollierte Weiterkondensation einzustellen.

Die erfindungsgemäße Präparationslösung wird vorzugsweise in ungeschäumtem Zustand auf die jeweils in Betracht kommende Unterlage aufgebracht. Sie kann beispielsweise durch Sprühen, Rakeln, Walzen, Drucken oder mit Hilfe geeigneter anderer technischer Vorrichtungen, die dem Fachmann bekannt sind, wie z. B. eine Leimpresse, eine Filmpresse, eine Luftbürste, ein Aggregat zum Vorhangstreichen, auf die flächige Unterlage aufgebracht werden. Vorzugsweise werden berührungslose Verfahren oder Verfahren mit möglichst geringem Druck auf das flächige Substrat angewendet, um das Wegschlagen des Harzes in das Substrat zu vermindern.

Der Auftrag kann einseitig oder auch beidseitig, entweder gleichzeitig oder nacheinander vorgenommen werden. Die Menge an härtbarem Harz, die mit Hilfe der Präparationslösung auf das flächige Substrat aufgetragen wird, beträgt beispielsweise 0,1 bis 90 Gew.-%, vorzugsweise 0,5 bis 50 Gew.-%, insbesondere 0,5 bis 30 Gew.-%, bezogen auf das Flächengewicht des unbeschichteten, trockenen flächigen Substrats.

Sie liegt damit wesentlich unterhalb der Menge, die für die Herstellung von Dekorfolien durch Tränken von flächigen Substraten mit Melamin/Formaldehyd-Harzen angewendet werden. Die jeweils auf das Substrat aufgetragene Menge an Vorkondensat hat einen entscheidenden Einfluss auf die Flexibilität, Weichheit und den Griff der erfindungsgemäßen Produkte.

Außerdem hat die Verteilung der Präparationslösung bzw. des gehärteten Harzes auf dem Substrat einen erheblichen Einfluss auf die Flexibilität der erfindungsgemäßen Produkte. Die Präparationslösung kann beispielsweise ungleichmäßig auf die Unterlage aufgebracht werden, wobei sie beispielsweise die Unterlage vollflächig bedeckt, jedoch darauf nicht gleichmäßig verteilt ist. Eine weitere Variation besteht darin, dass man die Präparationslösung mustergemäß auf das flächige Substrat druckt. So erhält man beispielsweise besonders flexible Produkte, wenn man die Präparationslösung in Form von parallelen Streifen oder punktförmig auf die Unterlage druckt.

Nach dem Aufbringen der Präparationslösung auf die flächige Unterlage erfolgt das Vernetzen des wärmehärtbaren Harzes und das Trocknen der mit einer Auflage eines Vorkondensates eines wärmehärtbaren Harzes versehenen flächigen Substrate, wobei Vernetzen und Trocknen gleichzeitig oder nacheinander ablaufen können. Eine vorteilhafte Ausführung besteht darin, dass man das wärmehärtbare Harz in feuchter Atmosphäre vernetzt und das Produkt danach trocknet. Die thermische Härtung der Harze und das Trocknen der Produkte kann beispielsweise in dem Temperaturbereich von 20 bis 250 °C, bevorzugt 20 bis 200°C, besonders bevorzugt 20 bis 150°C stattfinden.

Der Trockenschritt kann beispielsweise auch in Gastrocknern oder in IR-Trocknern vorgenommen werden. Je höher die jeweils angewendete Temperatur liegt, desto kürzer ist die Verweilzeit des zu trocknenden Materials in der Trocknungsvorrichtung. Falls gewünscht kann das erfindungsgemäße Produkt nach dem Trocknen noch bei Temperaturen bis zu 300 °C getempert werden. Auch Temperaturen oberhalb von 300 °C können zum Aushärten des Harzes angewendet werden, jedoch sind dann die erforderlichen Verweilzeiten sehr kurz.

Das erfindunggemäße Verfahren führt zu den flexiblen, flächigen Substraten, in welche nach derzeitigem Kenntnisstand das Harz nicht homogen im Substrat verteilt ist, sondern im wesentlichen an der Oberfläche des Substrats, nämlich als aufgetragene Schicht verbleibt.

Man erhält flexible, flächige Substrate, die als Wischtücher für die Reinigung von Oberflächen im Haushalt und in der Industrie verwendet werden. Sie eignen sich insbesondere als abrasive Wischtücher für die Oberflächenreinigung von Gegenständen aus Metall, Glas, Porzellan, Kunststoff und Holz. Die erfindungsgemäßen Produkte eignen sich insbesondere als Einmalartikel, können jedoch gegebenenfalls mehrmals verwendet werden. Eine mehrmalige Verwendung ist vor allem bei solchen erfindungsgemäßen Produkten gegeben, die als Unterlage ein Gewebe oder Vlies enthalten.

Die Prozentangaben in den Beispielen bedeuten Gewichtsprozent, sofern sich aus dem Zusammenhang nicht anderes ergibt.

### Beispiele

### Unterscheidung der Härtertypen ("schnelle" und "langsame" Härter)

Eine Lösung aus 100 g eines Tränkharzes (Melamin-Formaldehydharz) der BASF SE (siehe Tabelle) wurde mit der angegebenen Menge Härter versetzt und in Marmeladengläser mit Deckel gefüllt. Die Mischungen wurden bei Raumtemperatur von Hand geschüttelt und dabei die Viskosität der Proben beurteilt. In folgender Tabelle sind die Zeitpunkte notiert, zwischen denen die Lösung verarbeitbar war.

| Kondensat | Härter | Menge | Start | Ende | Verarbeitungsfenster |
|---|---|---|---|---|---|
| | | % w/w | min | min | min |
| KMT 792 | Ameisensäure | 5 | 42 | 97 | 55 |
| KMT 792 | Ameisensäure | 20 | 6,5 | 9,5 | 3 |
| KMT 783 | Ameisensäure | 5 | 24,5 | 57 | 32,5 |
| KMT 783 | Ameisensäure | 20 | 10 | 18,5 | 8,5 |
| KMT 753 | Ameisensäure | 5 | 33,5 | 59,5 | 26 |
| KMT 753 | Ameisensäure | 20 | 8 | 11 | 3 |
| KMT 753 | Härter 528 | 1 | 60+ | | > 1000 |
| KMT 753 | Härter 528 | 5 | 60+ | | > 1000 |
| KMT 753 | Härter 528 | 20 | 60+ | | > 1000 |

Härter 527, Härter 528 und Härter 529 der BASF SE basieren auf organischen Aminen.

### Herstellung der beschichteten Papiere

### Präparationslösung 1 (Zum Vergleich)

Aus einem pulverförmigen Vorkondensat aus Melamin und Formaldehyd (Kauramin^{®} KMT 773 (Pulver, BASF)) Wasser wurde eine 20 %ige wässrige Lösung hergestellt, indem man vollständig entsalztes Wasser in einem Becherglas vorlegte, das Pulver langsam eintrug und die Mischung anschließend 1 Stunde mit einem Ultra-Turrax^{®} behandelte, der auf die höchste Stufe eingestellt war. Danach filtrierte man die wässrige Lösung des Vorkondensates über einen Faltenfilter. Zu 30 g dieser Lösung gab man 3,5 g Ameisensäure (100 %ig) und 100 µl eines mit Fluor substituierten oberflächenaktiven Mittels (Zonyl^{®} FS 300, DuPont) und lagerte sie 6 Minuten bei einer Temperatur von 70 °C in einem Trockenschrank.

### Präparationslösung 2 (erfindungsgemäß)

Aus einem Vorkondensat aus Melamin und Formaldehyd (Kauramin^{®} KMT 753 (Lösung, BASF SE)) Wasser wurde eine 28 %ige wässrige Lösung hergestellt, indem man vollständig entsalztes Wasser mit der Tränkharzlösung mischte. Zu 30 g dieser Lösung gab man 0,25 g Härter 528 (80 % ig) und 100 µl eines mit Fluor substituierten oberflächenaktiven Mittels (Zonyl^{®} FS 300, DuPont) sowie 0,042 g Guarkernmehl, so dass die Viskosität der Präparationslösung 2 einen Wert von etwa 150 mPa*s hatte.

### Präparationslösung 2a (erfindungsgemäß mit Effektstoff)

Aus einem Vorkondensat aus Melamin und Formaldehyd (Kauramin^{®} KMT 753 (Lösung, BASF SE)) Wasser wurde eine 28 %ige wässrige Lösung hergestellt, indem man vollständig entsalztes Wasser mit der Tränkharzlösung mischte. Zu 30 g dieser Lösung gab man 100 Mikroliter eines mit Fluor substituierten oberflächenaktiven Mittels (Zonyl^{®} FS 300, DuPont) sowie 0,042 g Guarkernmehl, so dass die Viskosität der Präparationslösung 2a einen Wert von etwa 128 mPa*s hatte. In dieser Lösung wurden 2 Gew.-%, bezogen auf die Masse des eingesetzten Harzes, Duftkapseln dispergiert. 5 min bevor die Lösung auf das Papier gedruckt wurde, versetzte man die Harzlösung mit 0,48 g Ameisensäure (entspricht 10 Gew.-% bezogen auf den Feststoffanteil des Harzes).

### Präparationslösung 3 (erfindungsgemäß, ohne Härter)

Aus einem Vorkondensat aus Melamin und Formaldehyd (Kauramin^{®} KMT 753 (Lösung, BASF SE)) Wasser wurde eine 28 %ige wässrige Lösung hergestellt, indem man vollständig entsalztes Wasser mit der Tränkharzlösung mischte. Zu 30 g dieser Lösung gab man 100 Mikroliter eines mit Fluor substituierten oberflächenaktiven Mittels (Zonyl^{®} FS 300, DuPont) sowie 0,042 g Guarkernmehl, so daß die Viskosität der Präparationslösung 2 einen Wert von etwa 137 mPa*s hatte.

### Beispiel 1 (Transferpresse, Präparationslösung 2)

Auf ein 23,8cm x 25,7cm großes Stück Küchenrolle (TORK^{®} (Premium)-Küchenrolle, SCA) mit einem Flächengewicht von 53 g/m² wurde ein Teil der Präparationslösung 2 einseitig mit Hilfe einer Transferpresse aufgetragen. Das beschichtete Material wurde dann auf eine Platte aus Aluminium gelegt und 20 min bei 120 °C im Trockenschrank getrocknet. Danach war das Papier trocken und vernetzt. Die Menge an Harz, die appliziert wurde, betrug 13 %, bezogen auf trockene Küchenrolle.

### Beispiel 2 (Druckmaschine, Präparationslösung 2)

Auf ein 23,8cm x 25,7cm großes Stück Küchenrolle (TORK^{®} (Premium)-Küchenrolle, SCA) mit einem Flächengewicht von 53 g/m² wurde ein Teil der Präparationslösung 2 einseitig mit Hilfe einer Druckmaschine aufgetragen. Das beschichtete Material wurde dann auf eine Platte aus Aluminium gelegt und 20 min bei 120 °C im Trockenschrank getrocknet. Danach war das Papier trocken und vernetzt. Die Menge an Harz, die appliziert wurde, betrug 5 %, bezogen auf trockene Küchenrolle.

### Beispiel 3 (Druckmaschine, Präparationslösung 3)

Auf ein 23,8cm x 25,7cm großes Stück Küchenrolle (TORK^{®} (Premium)-Küchenrolle, SCA) mit einem Flächengewicht von 53 g/m² wurde ein Teil der Präparationslösung 3 einseitig mit Hilfe einer Druckmaschine aufgetragen. Das beschichtete Material wurde dann auf eine Platte aus Aluminium gelegt und 60 min bei 120 °C im Trockenschrank getrocknet. Danach war das Papier trocken und vernetzt. Die Menge an Harz, die appliziert wurde, betrug 5 %, bezogen auf trockene Küchenrolle.

### Beispiel 4 (zum Vergleich, Präparationslösung 1)

Auf ein 23,8cm x 25,7cm großes Stück Küchenrolle (TORK^{®} (Premium)-Küchenrolle, SCA) mit einem Flächengewicht von 53 g/m² wurde versucht ein Teil der Präparationslösung 1 einseitig mit Hilfe einer Druckmaschine aufzutragen. Die Auftragung verlief sehr inhomogen, die Viskosität der Präparationslösung 1 wurde schnell größer und die Präparationslösung 1 benetzte nicht gleichmäßig das Papier. Die Abtrennung des behandelten Papiers von der Druckwalze war nicht möglich ohne das Papier zu zerstören, das Papier klebte stark an der Druckwalze.

### Beispiel 5 (Transferpresse, Variante mit Effektstoff, Präparationslösung 2a)

Auf ein 23,8cm x 25,7cm großes Stück Küchenrolle (TORK^{®} (Premium)-Küchenrolle, SCA) mit einem Flächengewicht von 53 g/m² wurde ein Teil der Präparationslösung 2a einseitig mit Hilfe einer Transferpresse aufgetragen. Das beschichtete Material wurde dann auf eine Platte aus Aluminium gelegt und 20 min bei 120 °C im Trockenschrank getrocknet. Danach war das Papier trocken und vernetzt. Die Menge an Harz, die appliziert wurde, betrug 12 Gew.-%, bezogen auf trockene Küchenrolle.

### Reinigungswirkung

Die gemäß den Beispielen erhaltenen beschichteten Papiere wurden auf ihre Eignung als Wischtücher getestet und mit handelsüblichen, nicht beschichteten Papieren verglichen. Hierzu wurde die zu testende Probe jeweils auf eine Seite eines zylinderförmigen Stempels mit einem Durchmesser von 13 mm und einem Gewicht von 600 g mit Hilfe eines Klebers fixiert. Auf einer Schüttelmaschine (Crock-Meter) wurde eine Glasplatte befestigt. Auf die Glasplatte wurden anschließend mit einem Permanent-Marker mehrere Streifen gezeichnet (Permanent Marker Edding 3000). Auf diese Fläche wurde der zylinderförmige Stempel gestellt, wobei die Seite des Stempels, die mit der zu prüfenden Probe beklebt war, jeweils auf Glasplatte auflag. Die zu reinigende Stelle der Platte wurde optional mit 0,5 ml vollständig entsalztem Wasser befeuchtet. Die Schüttelmaschine arbeitete mit 20 Doppelhüben/min bei einer waagerechten Auslenkung der Platte von 5 cm. Es wurden 30 Hübe bzw. 5 Hübe im Feuchten durchgeführt und der Grad der Entfernung der Markierungen auf der Platte bestimmt: Dazu wurden die Platten an einem Auflichtscanner abfotografiert und mit Hilfe der Software "Image J" (NIH) der mittlere Grauwert der durch die Reibwirkung der Tücher veränderten Eddingstreifen bestimmt. Im Vergleich mit Referenzmustern wurde dann die relative Reinigungswirkung (0 % = kein Effekt, 100% = vollständig entfernt) bestimmt.
Die durchgeführten Tests und die dabei erhaltenen Ergebnisse sind in der folgenden Tabelle angegeben.

| Tuch | relative Reinigungswirkung | |
|---|---|---|
| | trocken | feucht |
| Beispiel 1 | 63% | 92% |
| Beispiel 2 | 70% | 100% |
| Beispiel 3 | 65% | 86% |
| Beispiel 5 | 60% | 95% |
| ohne Beschichtung | 0% | 20% |

### Beispiel 6 (Transferpresse, Präparationslösung 2)

Auf ein 20cm x 20cm großes Stück eines Tissues mit Flächengewicht 35 g/m² wurde ein Teil der Präparationslösung 2 einseitig mit Hilfe einer Transferpresse aufgetragen. Das beschichtete Material wurde dann auf eine Platte aus Aluminium gelegt und 20 min bei 120 °C im Trockenschrank getrocknet. Danach war das Substrat trocken und die Harzschicht ausgehärtet. Die Menge an Harz, die appliziert wurde, betrug 7,8% bezogen auf das Flächengewicht des unbeschichteten Materials.

Muster des so hergestellten Materials wurden mittels Konfokale Raman-Mikroskopie auf die Verteilung von Melamin innerhalb des Tissues hin untersucht.

### Probenpräparation und Messmethode: Konfokale Raman-Mikroskopie:

Von der Probe wurde ein Tiefenscan (XZ-Richtung) aufgenommen. Da sich hierbei die Fokusebene aufgrund der Erwärmung durch den Laser ständig veränderte, wurde die Probe in Epoxydharz eingebettet und ein Anschnitt präpariert. Dieser wurde lateral (XY- Ebene) abgerastert (100x Objektiv, Anregung 532 nm), was der Abbildung der chemischen Zusammensetzung über die Probendicke entspricht.
Die charakteristischen Signale der einzelnen Komponenten wurden integriert und gegen räumliche Koordinaten (XY) als Falschfarben dargestellt. Dabei wurden folgende Banden zur Auswertung benutzt:
Melamin: 975 cm-1 Epoxydharz: 3075 cm-1 Papier: 3130-3620 cm-1

### Ergebnisse des Raman-Mappings:

Auf der Oberseite des Papiers befindet sich eine sehr dünne Schicht von Melamin Die Beschichtung ist auf Grund der Tuchsaugfähigkeit in den Zwischenraum zur nächsten Faser) in bis zu 25 µm Probentiefe eingedrungen. Tiefer konnte Melamin im Tuch allerdings nicht mehr nachgewiesen werden.

## Patentansprüche

1. Flexible, flächige Substrate mit einer abrasiven Oberfläche, erhältlich durch Aufbringen einer wässrigen Lösung oder Dispersion mindestens eines Vorkondensates eines wärmehärtbaren Harzes auf die Oberseite und/oder Unterseite eines flexiblen, flächigen Substrates in einer Menge im Bereich von 0,1 bis 90 Gew.-%, bezogen auf das unbeschichtete, trockene Substrat, Vernetzen des Vorkondensates und Trocknen des behandelten Substrates, **dadurch gekennzeichnet, daß** die wässrige Lösung oder Dispersion mindestens eines Vorkondensates eines wärmehärtbaren Harzes (i) einen polymeren Verdicker ausgewählt aus der Gruppe bestehend aus: Polysaccaride, Proteine, modifizierte Cellulose, modifizierte Stärken, Polyvinylalkohole, Polyacrylamide, Polyvinylpyrolidon und Polyethylenglykole in einer Menge im Bereich von 0,01 Gew.-% bis 10 Gew.-% und gegebenenfalls (ii) einen Härter der erst bei Temperaturen ab circa 60 °C die Weiterkondensation des wärmehärtbaren Harzes katalysiert und als härteaktive Komponenten Salze von Säuren mit Ammoniak oder Aminen oder Addukte von Lewissäuren mit Ammoniak oder Aminen enthält, enthält.

2. Flexible, flächige Substrate nach Anspruch 1, **dadurch gekennzeichnet, dass** die Vorkondensate der wärmehärtbaren Harze ausgewählt sind aus der Gruppe der Melamin/Formaldehyd-Vorkondensate, Harnstoff/Formaldehyd-Vorkondensate, Harnstoff/Glyoxal-Vorkondensate und Phenol/Formaldehyd-Vorkondensate.

3. Flexible, flächige Substrate nach Anspruch 1 oder 2, **dadurch gekennzeichnet, dass** man als wärmehärtbares Harz ein Vorkondensat aus Melamin und Formaldehyd einsetzt, bei dem das Molverhältnis von Melamin zu Formaldehyd größer als 1 : 2 ist.

4. Flexible, flächige Substrate nach Anspruch 3, **dadurch gekennzeichnet, dass** man als wärmehärtbares Harz ein Vorkondensat einsetzt, bei dem das Molverhältnis von Melamin zu Formaldehyd 1 : 1,0 bis 1 : 1,9 beträgt.

5. Flexible, flächige Substrate nach einem der Ansprüche 1 bis 4, **dadurch gekennzeichnet, dass** die Substrate ausgewählt sind aus der Gruppe der Vliese (inclusive sogenannter Nonwovens), Gewebe (inclusive sogenannter Tissues), Gewirke, Papier, Pappe und Karton.

6. Flexible, flächige Substrate nach einem der Ansprüche 1 bis 5, **dadurch gekennzeichnet, dass** das Substrat Papier oder ein Vlies (inclusive sogenannter Nonwovens)) aus Cellulosefasern, oder ein Gewebe (inclusive sogenannter Tissues) aus Cellulosefasern ist.

7. Flexible, flächige Substrate nach einem der Ansprüche 1 bis 6, **dadurch gekennzeichnet, dass** die Lösung oder Dispersion des Vorkondensates mindestens einen Härter (ii) enthält.

8. Flexible, flächige Substrate nach einem der Ansprüche 1 bis 7, **dadurch gekennzeichnet, dass** die Lösung oder Dispersion des Vorkondensates mindestens ein Tensid enthält.

9. Flexible, flächige Substrate nach einem der Ansprüche 1 bis 8, **dadurch gekennzeichnet, dass** die Lösung oder Dispersion des Vorkondensates 0,01 bis 5 Gew.-% mindestens eines polymeren Verdickers (i) enthält.

10. Flexible, flächige Substrate nach einem der Ansprüche 1 bis 9, **dadurch gekennzeichnet, dass** die Lösung oder Dispersion des Vorkondensates vollflächig auf das Substrat aufgebracht wird.

11. Flexible, flächige Substrate nach einem der Ansprüche 1 bis 9, **dadurch gekennzeichnet, dass** die wässrige Lösung oder Dispersion des Vorkondensates in Form eines Musters auf das Substrat aufgebracht wird.

12. Flexible, flächige Substrate nach einem der Ansprüche 1 bis 11, **dadurch gekennzeichnet, dass** das mit einer wässrigen Lösung eines Vorkondensates behandelte Substrat bei einer Temperatur in dem Bereich von 20 bis 150°C gehärtet und getrocknet wird.

13. Flexible, flächige Substrate nach einem der Ansprüche 1 bis 12, **dadurch gekennzeichnet, dass** die Menge des wärmehärtbaren Harzes, bezogen auf das unbeschichtete, trockene Substrat, 0,5 bis 50 Gew.-% beträgt.

14. Flexible, flächige Substrate nach einem der Ansprüche 1 bis 13, **dadurch gekennzeichnet, dass** sie neben den üblichen teilchenförmigen anorganischen Verbindungen als Zusatzstoffen oder anstatt der üblichen teilchenförmigen anorganischen Verbindungen als Zusatzstoffe noch Wirk- und Effektstoffe enthalten.

15. Flexible, flächige Substrate nach einem der Ansprüche 1 bis 14, **dadurch gekennzeichnet, dass** sie neben den üblichen Zusatzstoffen oder anstatt der üblichen Zusatzstoffe noch Wirk- und Effektstoffe enthalten, welche in verkapseiter Form eingesetzt werden.

16. Verwendung der flexiblen, flächigen Substrate nach den Ansprüchen 1 bis 15 als Wischtücher für die Reinigung von Oberflächen im Haushalt und in der Industrie.

17. Verfahren zur Herstellung von flexiblen, flächigen Substraten mit einer abrasiven Oberfläche, wie in den Ansprüchen 1 bis 16 definiert, wobei man eine wässrige Lösung oder Dispersion mindestens eines Vorkondensates eines wärmehärtbaren Harzes auf die Oberseite und/oder Unterseite eines flexiblen, flächigen Substrates in einer Menge im Bereich von 0,1 bis 90 Gew.-%, bezogen auf das unbeschichtete, trockene Substrat aufbringt, anschließend das Vorkondensat vernetzt und das behandelten Substrat trocknet, **dadurch gekennzeichnet, daß** die wässrige Lösung oder Dispersion mindestens eines Vorkondensates eines wärmehärtbaren Harzes (i) einen polymeren Verdicker ausgewählt aus der Gruppe bestehend aus: Polysaccaride, Proteine, modifizierte Cellulose, modifizierte Stärken, Polyvinylalkohole, Polyacrylamide, Polyvinylpyrolidon und Polyethylenglykole in einer Menge im Bereich von 0,01 Gew.% bis 10 Gew.-% und gegebenenfalls (ii) einen Härter der erst bei Temperaturen ab circa 60 °C die Weiterkondensation des wärmehärtbaren Harzes katalysiert und als härteaktive Komponenten Salze von Säuren mit Ammoniak oder Aminen oder Addukte von Lewissäuren mit Ammoniak oder Aminen enthält, enthält.

## Claims

1. A flexible, sheet-like substrate having an abrasive surface, obtainable by applying an aqueous solution or dispersion of at least one precondensate of a heat-curable resin to the top and/or bottom of a flexible, sheet-like substrate in an amount in the range from 0.1 to 90% by weight, based on the uncoated, dry substrate, crosslinking the precondensate and drying the treated substrate, wherein the aqueous solution or dispersion of at least one precondensate of a heat-curable resin comprises (i) a polymeric thickener selected from the group consisting of polysaccharides, proteins, modified cellulose, modified starches, polyvinyl alcohols, polyacrylamides, polyvinylpyrrolidone and polyethylene glycols in an amount ranging from 0.01% by weight to 10% by weight and optionally (ii) a curative that catalyzes further condensation of the heat-curable resin at from about 60°C and comprises as curative-active components salts of acids with ammonia or amines or adducts of Lewis acids with ammonia or amines.

2. The flexible, sheet-like substrate according to claim 1, wherein the precondensates of the heat-curable resins are selected from the group consisting of the melamine/formaldehyde precondensates, urea/formaldehyde precondensates, urea/glyoxal precondensates and phenol/formaldehyde precondensates.

3. The flexible, sheet-like substrate according to claim 1 or 2, wherein the heat-curable resin used is a precondensate of melamine and formaldehyde in which the molar ratio of melamine to formaldehyde is greater than 1:2.

4. The flexible, sheet-like substrate according to claim 3, wherein the heat-curable resin used is a precondensate in which the molar ratio of melamine to formaldehyde is from 1:1.0 to 1:1.9.

5. The flexible, sheet-like substrate according to any of claims 1 to 4, wherein the substrate is selected from the group consisting of fibrous nonwoven webs (including so-called nonwovens), wovens (including so-called tissues), knits, paper, paperboard and cardboard.

6. The flexible, sheet-like substrate according to any of claims 1 to 5, wherein the substrate is paper or a fibrous nonwoven web (including so-called nonwovens) composed of cellulose fibers, or a woven (including so-called tissues) composed of cellulose fibers.

7. The flexible, sheet-like substrate according to any of claims 1 to 6, wherein the solution or dispersion of the precondensate comprises at least one curative (ii).

8. The flexible, sheet-like substrate according to any of claims 1 to 7, wherein the solution or dispersion of the precondensate comprises at least one surfactant.

9. The flexible, sheet-like substrate according to any one of claims 1 to 8, wherein the solution or dispersion of the precondensate comprises from 0.01 to 5% by weight of at least one polymeric thickener (i).

10. The flexible, sheet-like substrate according to any of claims 1 to 9, wherein the solution or dispersion of the precondensate is applied to the whole surface of the substrate.

11. The flexible, sheet-like substrate according to any of claims 1 to 9, wherein the aqueous solution or dispersion of the precondensate is applied in the form of a pattern to the substrate.

12. The flexible, sheet-like substrate according to any of claims 1 to 11, wherein the substrate treated with an aqueous solution of a precondensate is cured and dried at a temperature in the range of from 20 to 150°C.

13. The flexible, sheet-like substrate according to any of claims 1 to 12, wherein the amount of the heat-curable resin, based on the uncoated, dry substrate, is from 0.5 to 50% by weight.

14. The flexible, sheet-like substrate according to any of claims 1 to 13, comprising active and benefit agents in addition to or instead of customary particulate, inorganic compounds as added substances.

15. The flexible, sheet-like substrate according to any of claims 1 to 14, comprising active and benefit agents in encapsulated form in addition to or instead of customary added substances.

16. The use of the flexible, sheet-like substrate according to claims 1 to 15 as wiping cloths for cleaning surfaces in the household and in industry.

17. A process for producing a flexible, sheet-like substrate having an abrasive surface as defined in claims 1 to 16, which comprises applying an aqueous solution or dispersion of at least one precondensate of a heat-curable resin to the top and/or bottom of a flexible, sheet-like substrate in an amount in the range from 0.1 to 90% by weight, based on the uncoated, dry substrate, crosslinking the precondensate and drying the treated substrate, wherein the aqueous solution or dispersion of at least one precondensate of a heat-curable resin comprises (i) a polymeric thickener selected from the group consisting of polysaccharides, proteins, modified cellulose, modified starches, polyvinyl alcohols, polyacrylamides, polyvinylpyrrolidone and polyethylene glycols in an amount ranging from 0.01% by weight to 10% by weight and optionally (ii) a curative that catalyzes further condensation of the heat-curable resin at not less than about 60°C and comprises as curative-active components salts of acids with ammonia or amines or adducts of Lewis acids with ammonia or amines.

## Revendications

1. Supports plats, flexibles, présentant une surface abrasive, pouvant être obtenus par application d'une solution ou dispersion aqueuse d'au moins un produit de précondensation d'une résine thermodurcissable sur la face supérieure et/ou la face inférieure d'un support plat flexible, en une quantité dans la plage de 0,1 à 90 % en poids, par rapport au support sec non revêtu, réticulation du produit de précondensation et séchage du support traité, **caractérisés en ce que** la solution ou dispersion aqueuse d'au moins un produit de précondensation d'une résine thermodurcissable contient (i) un épaississant polymère choisi dans le groupe constitué par : des polysaccharides, des protéines, une cellulose modifiée, des amidons modifiés, des poly(alcool vinylique)s, des polyacrylamides, la polyvinylpyrrolidone et des polyéthylèneglycols en une quantité dans la plage de 0,01 % en poids à 10 % en poids et éventuellement (ii) un durcisseur qui ne catalyse la poursuite de la condensation de la résine thermodurcissable qu'à des températures à partir d'environ 60 °C et contient, en tant que composants actifs pour le durcissement, des sels d'acides avec l'ammoniac ou des amines ou des adduits d'acides de Lewis avec l'ammoniac ou des amines.

2. Supports plats, flexibles, selon la revendication 1, **caractérisés en ce que** les produits de précondensation des résines thermodurcissables sont choisis dans le groupe des produits de précondensation mélamine/formaldéhyde, des produits de précondensation urée/formaldéhyde, des produits de précondensation urée/glyoxal et des produits de précondensation phénol/ formaldéhyde.

3. Supports plats, flexibles, selon la revendication 1 ou 2, **caractérisés en ce qu'**on utilise comme résine thermodurcissable un produit de précondensation de mélamine et formaldéhyde, dans lequel le rapport molaire de la mélamine au formaldéhyde est supérieur à 1 _{:} 2.

4. Supports plats, flexibles, selon la revendication 3, **caractérisés en ce qu'**on utilise comme résine thermodurcissable un produit de précondensation dans lequel le rapport molaire de la mélamine au formaldéhyde vaut de 1 : 1,0 à 1 : 1,9.

5. Supports plats, flexibles, selon l'une quelconque des revendications 1 à 4, **caractérisés en ce que** les supports sont choisis dans le groupe constitué par les voiles (les dénommés non-tissés inclus) les tissus (y compris les dénommées mousselines), les tricots, le papier, le carton et le carton mince.

6. Supports plats, flexibles, selon l'une quelconque des revendications 1 à 5, **caractérisés en ce que** le substrat est du papier ou un voile (les dénommés non-tissés inclus) à base de fibres de cellulose, ou un tissu (y compris les dénommées mousselines) à base de fibres de cellulose.

7. Supports plats, flexibles, selon l'une quelconque des revendications 1 à 6, **caractérisés en ce que** la solution ou dispersion du produit de précondensation contient au moins un durcisseur (ii).

8. Supports plats, flexibles, selon l'une quelconque des revendications 1 à 7, **caractérisés en ce que** la solution ou dispersion du produit de précondensation contient au moins un tensioactif.

9. Supports plats, flexibles, selon l'une quelconque des revendications 1 à 8, **caractérisés en ce que** la solution ou dispersion du produit de précondensation contient de 0,01 à 5 % en poids d'au moins un épaississant polymère (i).

10. Supports plats, flexibles, selon l'une quelconque des revendications 1 à 9, **caractérisés en ce que** la solution ou dispersion du produit de précondensation est appliquée sur le substrat sur toute sa surface.

11. Supports plats, flexibles, selon l'une quelconque des revendications 1 à 9, **caractérisés en ce qu'**on applique sur le support la solution ou dispersion aqueuse du produit de précondensation sous forme d'un motif.

12. Supports plats, flexibles, selon l'une quelconque des revendications 1 à 11, **caractérisés en ce que** le support traité par une solution aqueuse d'un produit de précondensation est durci et séché à une température dans la plage de 20 à 150 °C.

13. Supports plats, flexibles, selon l'une quelconque des revendications 1 à 12, **caractérisés en ce que** la quantité de la résine thermodurcissable, par rapport au support sec non revêtu, vaut de 0,5 à 50 % en poids.

14. Supports plats, flexibles, selon l'une quelconque des revendications 1 à 13, **caractérisés en ce qu'**en plus des composés inorganiques particulaires usuels en tant qu'additifs ou au lieu des composés inorganiques particulaires usuels en tant qu'additifs, ils contiennent encore des substances actives ou à effet.

15. Supports plats, flexibles, selon l'une quelconque des revendications 1 à 14, **caractérisés en ce qu'**en plus des additifs usuels ou au lieu des additifs usuels ils contiennent encore des substances actives ou à effet qui sont utilisées sous forme encapsulée.

16. Utilisation des supports plats, flexibles, selon l'une quelconque des revendications 1 à 15, en tant que chiffons pour le nettoyage de surfaces à la maison et dans l'industrie.

17. Procédé pour la production de supports plats, flexibles, présentant une surface abrasive, tels que définis dans les revendications 1 à 16, dans lequel on applique une solution ou dispersion aqueuse d'au moins un produit de précondensation d'une résine thermodurcissable sur la face supérieure et/ou la face inférieure d'un support plat flexible, en une quantité dans la plage de 0,1 à 90 % en poids, par rapport au support sec non revêtu, ensuite on fait réticuler le produit de précondensation et on sèche le support traité, **caractérisé en ce que** la solution ou dispersion aqueuse d'au moins un produit de précondensation d'une résine thermodurcissable contient (i) un épaississant polymère choisi dans le groupe constitué par : des polysaccharides, des protéines, une cellulose modifiée, des amidons modifiés, des poly(alcool vinylique)s, des polyacrylamides, la polyvinylpyrrolidone et des polyéthylèneglycols en une quantité dans la plage de 0,01 % en poids à 10 % en poids et éventuellement (ii) un durcisseur qui ne catalyse la poursuite de la condensation de la résine thermodurcissable qu'à des températures à partir d'environ 60 °C et contient, en tant que composants actifs pour le durcissement, des sels d'acides avec l'ammoniac ou des amines ou des adduits d'acides de Lewis avec l'ammoniac ou des amines.
